# EUROPEAN PATENT APPLICATION

(11) **EP 1 988 052 A1**
(43) Date of publication of application: **05.11.2008**
(21) Application number: 06714182.0
(22) Date of filing: 21.02.2006
(51) Int. Cl.: B66B 31/02

(54) **MOVING HANDRAIL REPAIR DEVICE FOR PASSENGER CONVEYOR**

(71) Applicant: MITSUBISHI DENKI KABUSHIKI KAISHA, Chiyoda-ku, Tokyo 100-8310 (JP)
(72) Inventor: KAWASAKI, Atsushi, Chiyoda-ku, Tokyo 1008310 (JP)
(74) Representative: HOFFMANN EITLE
(86) International application number: PCT/JP2006/303042
(87) International publication number: WO 2007/096948

(57) **Abstract**

A moving handrail repair device includes a self-travelling means and a heating means mounted on the self-travelling means. The self-travelling means travels on a balustrade of a passenger conveyor along a longitudinal direction of a moving handrail. The heatingmeans heats and melts a surface portion of the moving handrail. The surface portion of the moving handrail is formed of a thermoplastic material. In a case where the surface portion of the moving handrail is damaged, an object portion to be repaired of the surface portion is heated and melted, and then the object portion is re-hardened.

## Description

### Technical Field

The present invention relates to a passenger conveyor using a moving handrail having a surface portion formed of a thermoplastic material, and to a moving handrail repair device for the passenger conveyor, for repairing a surface portion of the moving handrail, which is damaged.

### Background Art

In a conventional passenger conveyor, when flaws or cracks are generated on a surface portion of a moving handrail, a damaged portion is cut away and the portion is covered with unvulcanized rubber as a substitute therefor, and the unvulcanized rubber is cured by a repairing tool (see, for example, Patent Document 1).

Patent document 1: Japanese Patent No. 3283480

### Disclosure of the Invention

### Problem to be solved by the Invention

However, the conventional method of repairing a moving handrail as described above takes much time and effort for a repair work. Accordingly, in a case where a damaged portion covers a wide range, even when a level of the damage is low, the repair is abandoned and replacement of the entire moving handrail is performed.

The present invention has been made to solve the above-mentioned problem, and it is an object of the present invention to obtain a moving handrail repair device for a passenger conveyor, capable of easily performing repair of a surface portion of the moving handrail.

### Means for solving the Problem

A moving handrail repair device for a passenger conveyor according to the present invention includes: a self-travelling means travelling on a balustrade of the passenger conveyor along a longitudinal direction of a moving handrail; and a heating means, which is mounted on the self-travelling means, for heating and melting a surface portion.

### Brief Description of the Drawings

Fig. 1 is a side view showing an escalator according to Embodiment 1 of the present invention.
Fig. 2 is a side view showing a moving handrail repair device of Fig. 1.
Fig. 3 is a plan view showing the moving handrail repair device of Fig. 2.
Fig. 4 is a sectional view taken along the line IV-IV of Fig. 2.
Fig. 5 is a sectional view taken along the line V-V of Fig. 2.
Fig. 6 is a plan view showing a pressing plate of Fig. 2.
Fig. 7 is an exploded view showing a method of mounting the moving handrail repair device on a balustrade of Fig. 1.
Fig. 8 is a block diagram showing a main portion of Fig. 2.

### Best Mode for carrying out the Invention

Hereinafter, a preferred embodiment of the present invention will be described with reference to the drawings.

### Embodiment 1

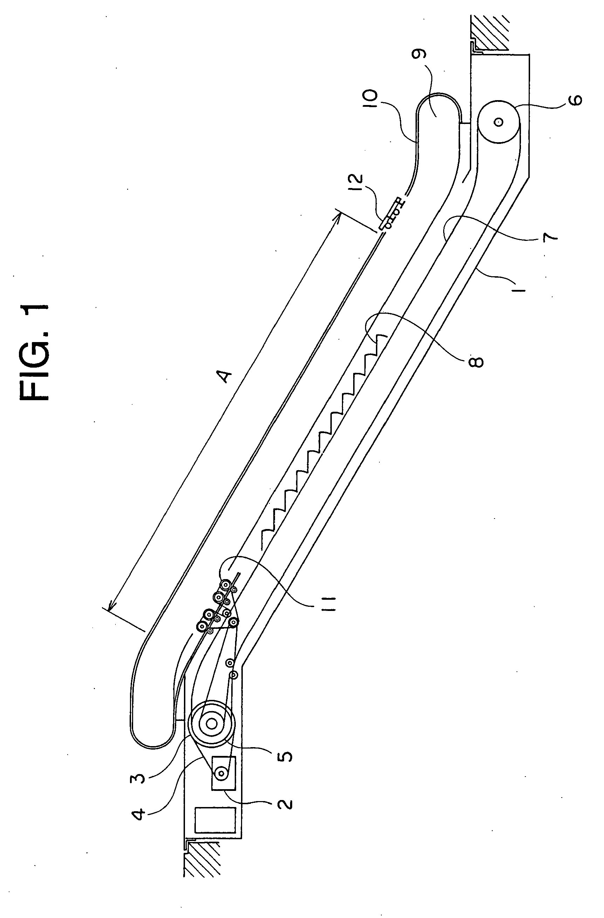

Fig. 1 is a side view of an escalator according to Embodiment 1 of the present invention, showing a state thereof at a time of handrail repair work. In Fig. 1, a main frame (truss) 1 is bridged between an upper floor and a lower floor. An upper end portion of the main frame 1 is provided with a driving machine 2, a driving sprocket 3 rotated by the driving machine 2, and a driving chain 4 for transmitting a driving force of the driving machine 2 to the driving sprocket 3.

The driving sprocket 3 is provided with an upper step sprocket 5 which is arranged so as to be coaxial with the driving sprocket 3 and is rotated integrally with the driving sprocket 3. A lower end portion of the main frame 1 is provided with a lower step sprocket 6. An endless step chain 7 is looped between the upper step sprocket 5 and the lower step sprocket 6.

The step chain 7 is coupled with a plurality of steps 8. That is, the steps 8 are coupled with each other by the step chain 7 in an endless manner (only a part of the steps 8 are shown in Fig. 1). Further, by driving the driving machine 2, the driving force is transmitted through the driving chain 4, the driving sprocket 3, the upper step sprocket 5, and the step chain 7 to the steps 8, and the steps 8 are circulated.

On the main frame 1, a pair of balustrades 9 are provided upright at an interval from each other in a width direction of the step 8. Each of the balustrades 9 is provided with an endless moving handrail 10. At least a surface portion of the moving handrail 10 is formed of a thermoplastic material such as urethane elastomer. A returning-side section of the moving handrail 10 is provided with a handrail driving portion 11 for allowing the moving handrail 10 to travel. Rotation of the driving sprocket 3 is transmitted to the handrail driving portion 11. As a result, the moving handrail 10 is circulated in synchronism with movement of the steps 8.

On the balustrade 9, a moving handrail repair device 12 for repairing the moving handrail 10 is set. The moving handrail repair device 12 is set on a lower end portion of a fixed-inclination part on a going side of a path of the moving handrail 10. The moving handrail repair device 12 can travel on the balustrade 9 along a longitudinal direction of the moving handrail 10.

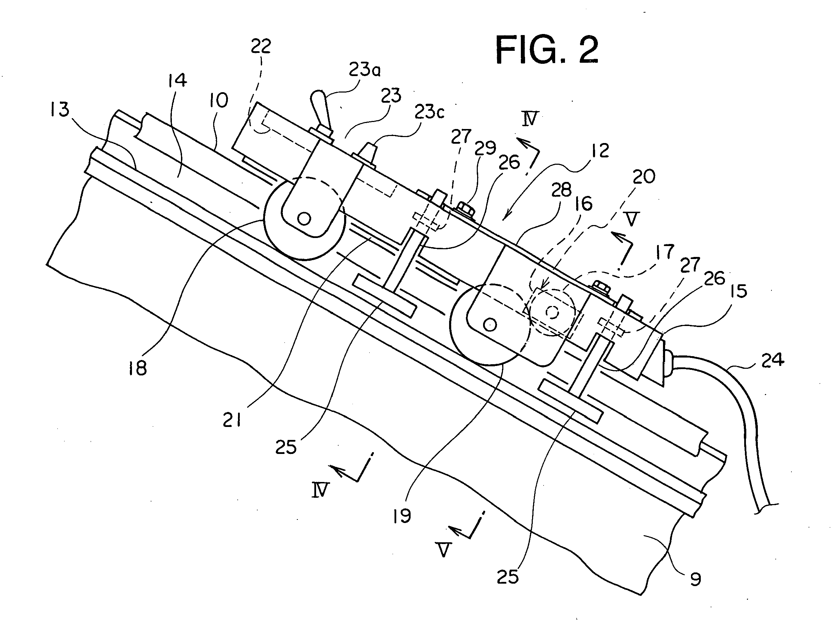

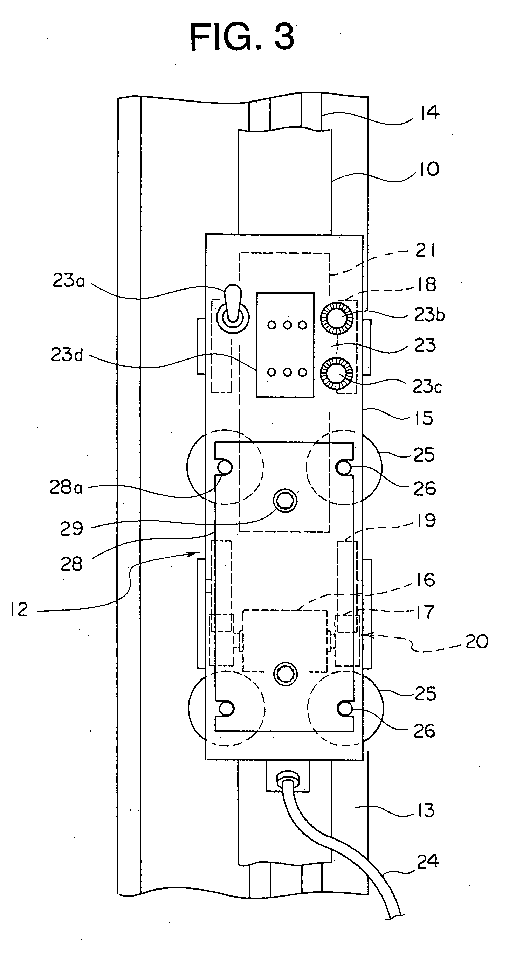

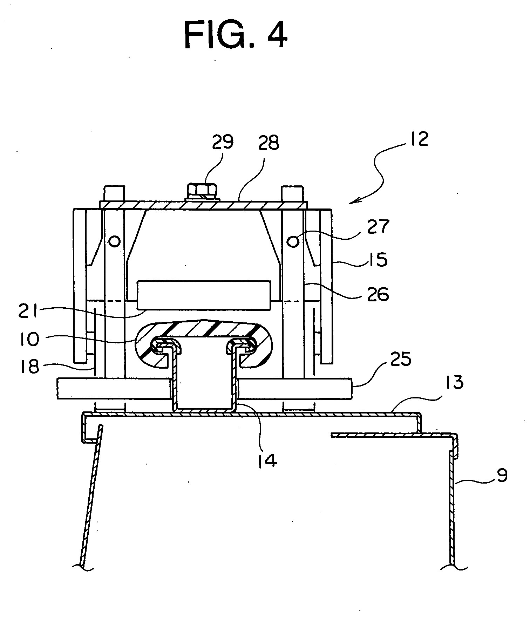

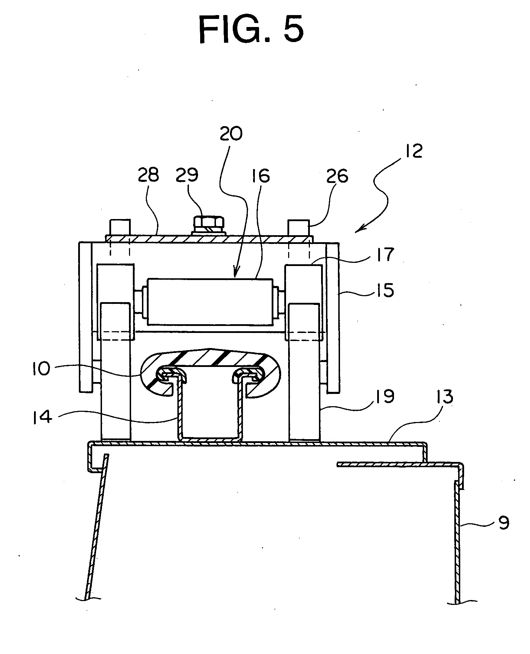

Fig. 2 is a side view showing the moving handrail repair device 12 of Fig. 1. Fig. 3 is a plan view showing the moving handrail repair device 12 of Fig. 2. Fig. 4 is a sectional view taken along the line IV-IV of Fig. 2. Fig. 5 is a sectional view taken along the line V-V of Fig. 2. Note that, in Figs. 4 and 5, for easier understanding of arrangement of main components, several components are not shown.

On an upper portion of the balustrade 9, a deck 13 is fixed. On the deck 13, a handrail guide 14 for guiding movement of the moving handrail 10 is fixed. In a casing 15 of the moving handrail repair device 12, there is provided a motor 16 serving as a drive source. Both ends of the motor 16 are provided with a pair of driving rollers 17, respectively, which are rotated by the motor 16.

The casing 15 is provided with a pair of front wheels 18 which freely rotate and a pair of rear wheels 19 which rotates through transmission of rotation of the driving rollers 17. The front wheels 18 and the rear wheels 19 are allowed to roll on an upper surface of the deck 13 at the time of travelling of the moving handrail repair device 12. A self-travelling means 20 includes the motor 16, the driving rollers 17, the front wheels 18, and the rear wheels 19. Travelling speed of the self-travellingmeans 20 canbe adjusted.

In a lower portion of the casing 15, there is provided a heating means (heating device) 21 opposed to the surface portion of the moving handrail 10. Used as the heating means 21 is, for example, an electric heater. Further, the heating means 21 heats the surface portion of the moving handrail 10 only in a range where the moving handrail 10 forms a straight line on the balustrade 9.

In the casing 15, there is provided a control portion 22 for controlling the self-travelling means 20 and the heating means 21. On the casing 15, there is provided an operation portion 23 for inputting commands to the control portion 22. The operation portion 23 is provided with a power switch 23a for powering on, a temperature adjusting knob 23b for adjusting temperature of heating by the heating means 21, a speed adjusting knob 23c for adjusting the travelling speed of the self-travelling means 20, and a display portion 23b for displaying the selected temperature and speed.

The motor 16, the heating means 21, and the control portion 22 are supplied with power from an outside through a power cable 24. The power cable 24 is drawn out from a rear end portion of the casing 15.

The casing 15 is provided with two pairs of (four) guide rollers 25 sandwiching the handrail guide 14 from both sides thereof. The guide rollers 25 are allowed to roll along side surfaces of the handrail guide 14 at the time of travelling of the moving handrail repair device 12.

Each of the guide rollers 25 is supported on a lower end portion of a support shaft 26 so as to freely rotate. Each of the support shafts 26 can rock about a rocking shaft 27 which is parallel to a travelling direction of the moving handrail repair device 12. Further, upper end portions of the support shafts 26 protrude from an upper surface of the casing 15.

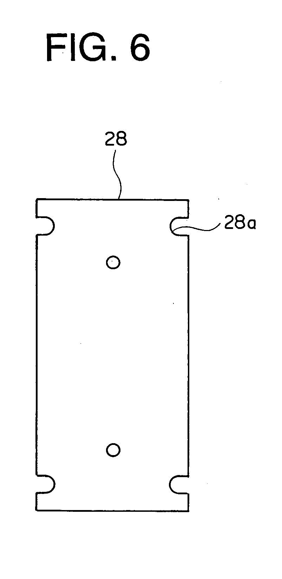

On the upper surface of the casing 15, a pressing plate 28 for holding the support shafts 26 in a position where the guide rollers 25 come into contact with the side surfaces of the handrail guide 14 by a plurality of bolts 29. The pressing plate 28 is provided with a plurality of recessed portions 28a engaging with the upper end portions of the support shafts 26, respectively. Fig. 6 is a plan view showing the pressing plate 28 of Fig. 2. By fitting the pressing plate 28 to the casing 15 with the upper ends of the support shafts 26 being inserted into the recessed portions 28a, rocking of the support shafts 26 in such a direction that the guide rollers 25 move away from the handrail guide 14 is regulated.

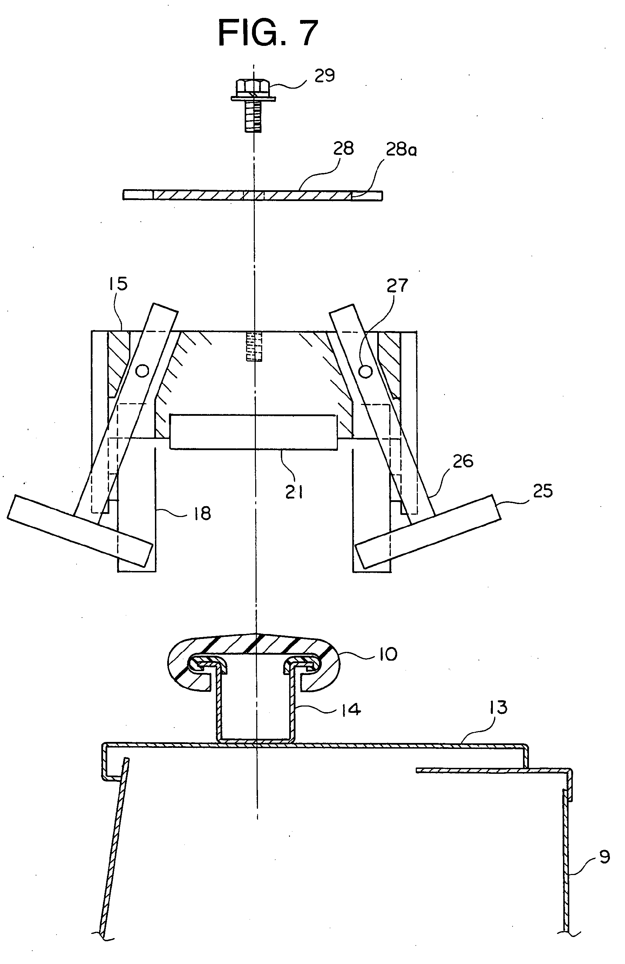

Fig. 7 is an exploded view showing a method of mounting the moving handrail repair device 12 on the balustrade 9 of Fig. 1. In a case where the moving handrail repair device 12 on the balustrade 9, the pressing plate 28 is removed from the casing 15, and the support shafts 26 are allowed to rock, thereby widening an interval between the guide rollers 25 on the left and right. In this state, the moving handrail 10 is allowed to pass between the guide rollers 25, and the front wheels 18 and the rear wheels 19 are placed on the deck 13. After that, while the upper end portions of the support shafts 26 are inserted into the recessed portions 28a, the pressing plate 28 is fixed to the upper surface of the casing 15 by the bolts 29. As a result, the handrail guide 14 is sandwiched from both sides thereof by the guide rollers 25.

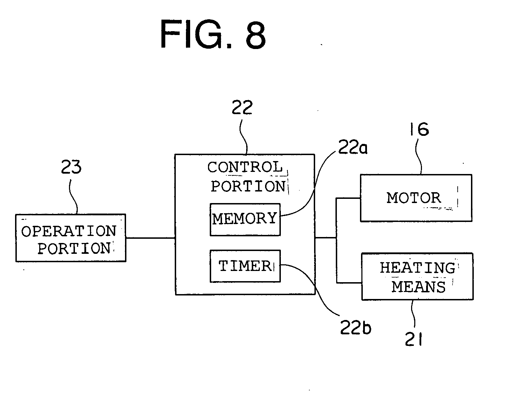

Fig. 8 is a block diagram showing a main portion of Fig. 2. The control portion 22 is provided with a memory 22a and a timer 22b. A command which relates to a travelling distance of the self-travelling means 20 (command on the travelling distance or travelling time) can be inputted through the operation portion 23 to the control portion 22. The control portion 22 stops the travelling of the self-travelling means 20 and stops heating by the heating means 21 after allowing the self-travelling means 20 to travel a distance corresponding to the inputted command.

Information on distance and speed, which is inputted to the control portion 22 is stored in the memory 22a. In the control portion 22, travelling time of the self-travelling means 20 is determined from the information on distance and speed, and counting is performed by the timer 22b.

Next, a method of repairing the moving handrail 10 will be described. First, the damaged portion, that is, an object portion to be repaired is moved into a section A of Fig. 1, and the moving handrail 10 is stopped. Then, the moving handrail repair device 12 is set at a lower end portion of the section A. After that, the commands for the travelling speed, the travelling distance (or travelling time), the heating temperature, and the like of the moving handrail repair device 12 are inputted to start heating and travelling operation.

When a material of the moving handrail 10 is thermoplastic urethane elastomer, the heating temperature is preferably 180°C to 200°C. This is because, amelting temperature of the thermoplastic urethane elastomer is 180°C to 200°C. When the heating temperature is lower than 180°C, the surface portion of the moving handrail 10 does not melt sufficiently, and when it is higher than 200°C, flowability of the surface portion of the moving handrail 10 increases, so there is a risk of a configuration thereof being distorted. For example, the heating means 21 is provided with a temperature sensor, and while monitoring the heating temperature, the power supply to the heating means 21 is controlled, thereby making it possible to maintain the heating temperature to be constant.

In this manner, by heating the moving handrail 10, the surface portion of the moving handrail 10 is moderately melted, so flaws and cracks generated on the surface portion of the moving handrail 10 is repaired. After that, the heating by the heating means 21 is stopped and the surface portion of the moving handrail 10 is subjected to natural cooling, thereby allowing the surface portion of the moving handrail 10 to be re-hardened, and the repair work is completed. Further, the surface portion of the moving handrail 10 may be subjected to forced cooling, to thereby allow the surface portion to be rapidly re-hardened.

Further, in a case where soil adheres onto the surface portion of the moving handrail 10, before the repairing by the moving handrail repair device 12, the soil is scraped off or rubbed off by using sand paper or chemicals. Through this work of removing the soil, the surface portion of the moving handrail 10 becomes rough and looses gloss thereon. However, by performing the repair work by the moving handrail repair device 12 after removing the soil, the surface portion of the moving handrail 10 is returned to a smooth state.

Further, in a case where a large flaw or crack is formed on the moving handrail 10, the above-mentioned repair work by the moving handrail repair device 12 may be performed after the flaw or crack is filled with a powder or pasty thermoplastic material.

As described above, according to the moving handrail repair device 12 of Embodiment 1, it is possible to easily repair the surface portion of the moving handrail 10. Further, the moving speed with respect to the moving handrail 10 can be easily adjusted and the moving speed can be reduced sufficiently. If the moving handrail 10 is allowed to travel while the repair device is fixed to the balustrade, in order to sufficiently reduce the moving speed of the moving handrail 10 (ultra-low speed operation), change of a control system for an escalator is required, thereby taking costs. However, with the moving handrail repair device 12 of a self-travelling type, the change on an escalator side is not required, so an increase in costs can be suppressed.

Further, the moving handrail 10 is heated only in a straight line part of the path of the moving handrail 10, so the repairing can be performed without remaining residual stress on the surface portion of the moving handrail 10. Thus, rigidity and life of the moving handrail 10 can be maintained.

Further, by allowing the self-travelling means 20 to travel the distance corresponding to the inputted command, the heating by the heating means 21 is stopped. Therefore, it is possible to repair only a range in which the repair is needed. In particular, when only the straight line part is repaired, a distance of the straight line part is measured in advance and the command corresponding to the distance is inputted, thereby making it possible to prevent a bent part of the moving handrail 10 from being heated.

Further, the travelling speed of the self-travelling means 20 can be adjusted, so according to a degree of the damage of the moving handrail 10, the heating time can be adjusted, so the repair can be automatically performed successively to various flaws.

Note that, while in the above-mentionedexample, the travelling of the self-travelling means 20 and the heating by the heating means 21 are started at the same time, the control portion 22 may start the travelling of the self-travelling means after a predetermined time since the heating means 21 starts heating. As a result, the repair of the moving handrail 10 can be started from a position where the moving handrail repair device 12 is first mounted.
Further, while in the above-mentioned example, the moving handrail repair device 12 is allowed to travel upward from the lower end portion of the fixed-inclination part, the moving handrail repair device 12 may be allowed to travel downward from the upper end portion of the fixed-inclination part. Further, the moving handrail repair device 12 may be allowed to travel not on an entirety of the fixed-inclination part but only on a portion thereof requiring the repair.

Further, while in the above-mentioned example, the heating means 21 opposing the surface portion of the moving handrail 10 is illustrated, there may be used a heating means of a type which brings a mold or a heating roller into direct contact with the moving handrail 10.
Still further, while in the above-mentioned example, power is supplied from the outside of the moving handrail repair device 12, a power source such as a battery may be mounted on the moving handrail repair device.
Yet further, while in the above-mentioned example, the escalator is illustrated, the present invention is applicable to a moving walkway.

## Claims

1. A moving handrail repair device for a passenger conveyor, for repairing a moving handrail having a surface portion formed of a thermoplastic material, comprising:
a self-travelling means travelling on a balustrade of the passenger conveyor along a longitudinal direction of the moving handrail; and
a heating means, which is mounted on the self-travelling means, for heating and melting the surface portion.

2. The moving handrail repair device for a passenger conveyor according to claim 1, wherein the heating means heats the surface portion only in a region where the moving handrail forms a straight line on the balustrade.

3. The moving handrail repair device for a passenger conveyor according to claim 1, further comprising a control portion to which a command which relates to a travelling distance of the self-travelling means can be inputted and which stops heating by the heating means after allowing the self-travelling means to travel a distance corresponding to the inputted command.

4. The moving handrail repair device for a passenger conveyor according to claim 1, wherein the self-travelling means automatically starts travelling after a predetermined time since the heating means starts heating.

5. The moving handrail repair device for a passenger conveyor according to claim 1, wherein travelling speed of the self-travelling means can be adjusted.
